# EUROPÄISCHE PATENTSCHRIFT

(11) **EP 1 895 642 B1**
(45) Veröffentlichungstag und Bekanntmachung des Hinweises auf die Patenterteilung: **15.01.2014**
(21) Anmeldenummer: 07021406.9
(22) Anmeldetag: 27.10.2000
(51) Int. Cl.: H02K 11/04, H02K 5/22

(54) **Drehstrommotor**
AC motor
Moteur à courant alternatif

(30) Priorität: 26.11.1999 DE 19957064
(43) Veröffentlichungstag der Anmeldung: 05.03.2008
(62) Teilanmeldung aus: 00123518.3
(73) Patentinhaber: SEW-EURODRIVE GmbH & Co. KG, 76646 Bruchsal (DE)
(72) Erfinder: Roth-Stielow, Jörg, 75015 Bretten (DE); Marmann, Udo, 68794 Oberhausen-Rheinhausen (DE); Schmidt, Josef, D-76676 Graben-Neudorf (DE)

(56) Entgegenhaltungen:
- EP-A- 0 351 272
- EP-A2- 0 858 146
- DE-A1- 19 704 226
- FR-A1- 2 763 180
- JP-A- 9 014 149
- JP-A- 11 275 801
- US-A- 4 642 607
- "EIBA Handbook Series Release 3.0 Volume 1: Primer Part 2: Introduction to the System", , 19. April 1999 (1999-04-19), XP002669718, Gefunden im Internet: URL:http://stielec.ac-aix-marseille.fr/cou rs/abati/eib/download/eib_introduction.pdf [gefunden am 2012-02-15]

## Beschreibung

Die Erfindung betrifft einen Drehstrommotor.

Aus der DE 197 04 801 ist ein Elektromotor mit Motoranschlusskasten und Motorschaltstufe bekannt, der Energieversorgungsleitungen und Datenleitungen aufweist. Es wird dort eine Sanftanlaufschaltung am Motoranschlusskasten beschrieben, die den Figuren gemäß auf den Motoranschlusskasten aufgesetzt wird. Im Betrieb wird der Elektromotor sehr warm. Daher stellt der Abtransport der in der Motorschaltstufe entstehenden Wärme eine technische Herausforderung dar, die bei der DE 197 04 801 mittels eines Peltier-Elementes angegangen wird. Diese Methode der Kühlung ist aufwendig und kostspielig. Zusätzlich hat sie einen hohen Raumbedarf und einen erhöhten Energiebedarf. Ein weiterer Nachteil ist, dass der Motoranschlusskasten speziell angepasst und gefertigt werden muss, damit die elektronische Schaltung einbringbar ist. Insbesondere ist keine Kompatibilität zu in der Industrie bekannten Normen, wie DESINA®, gegeben.

Für den Austausch von Informationen werden in komplexen Anlagen verschiedene leistungsfähige Bussysteme zum Übertragen von Information eingesetzt. Dem Fachmann sind Bussysteme bekannt, besonders Feldbus-Systeme wie INTERBUS, PROFIBUS, DeviceNet, CAN-Bus, AS-i oder auch LON, EIB und andere kabellose Systeme.

Aus der DE 197 39 780 ist eine Motorschaltstufe bekannt, die im Motoranschlusskasten eines Elektromotors eingebaut ist. Von Nachteil ist dabei, dass der Elektromotor nur ein- oder ausgeschaltet werden kann. Ein Sanftanlauf ist nicht durchführbar. Insbesondere weist eine Sanftanlaufstufe in manchen Betriebszuständen eine höhere Wärmeabgabe als eine einfache elektronische Schaltstufe nach DE 197 39 780 auf. Die dort angegebene Kühlung ist nicht ausreichend für eine Schaltung mit höherer Wärmeabgabe.

Aus der US 5 678 646 ist eine Antriebssystem bekannt, das modulare Einheiten aufweist.

Aus der WO 98135424 ist ein Elektromotor mit Frequenzumrichter bekannt, wobei ein einen Klemmenkasten ersetzende Zwischenteil vorgesehen ist.

Aus der FR 0 351 272 ist ein Elektromotor bekannt, bei dem Mittel für den modularen Aufbau gezeigt sind.

Aus der DE 197 04 226 A1 ist ein Elektromotor mit auf dem Anschlusskasten aufgesetztem Umrichter bekannt.

Der Erfindung liegt die Aufgabe zugrunde, unter Vermeidung der vorgenannten Nachteile einen Motor weiterzubilden, insbesondere umfassend den Motoranschlusskasten.

Erfindungsgemäß wird die Aufgabe mit einem Drehstrommotor nach den in Anspruch 1 angegebenen Merkmalen gelöst.

Wichtige Merkmale der Erfindung sind, dass der Deckel eine elektronische Schaltung und eine definierte elektrische und mechanische Schnittstelle zum Aufsetzen auf weitere, verschieden geartete Teile aufweist wobei die elektronische Schaltung Vorrichtungen zum Austausch von Informationen durch Aufmodulation elektrischer Signale auf die Leistungskabel umfasst. Von Vorteil ist dabei, dass durch die elektronische Schaltung ein verschleißfreies Beeinflussen des Elektromotors, wie Ein- und Ausschalten, Sanftanlauf und Fehlerkontrolle oder dergleichen, ausführbar ist und bei Notwendigkeit eines Austausches der elektronischen Schaltung, beispielsweise bei Defekt, Montage oder Umrüstung, der Austausch schnell, einfach und kostengünstig ausführbar ist.

Erfindungsgemäß ist der elektrische Steckverbinder des Unterteils direkt mit dem an seinem Motoranschlusskasten einen Steckverbinder aufweisenden Elektromotor durch Einstecken verbindbar.

Erfindungsgemäß weist die elektronische Schaltung einen Umsetzer zum Umsetzen von mit EIB oder LON übertragener oder zu übertragender Information auf digitale Ein-/Ausgänge und der Deckel hierfür entsprechende Anschlussvorrichtungen auf. Vorteilhafterweise erfüllt der Deckel also die Zusatzfunktion eines dezentralen Steuermoduls und .bietet dem Bussystem Zugriff auf Sensoren und Aktoren. In Weiterbildung ist sogar der Motor abhängig von Sensoren, insbesondere von induktiven Gebern oder Lichtschranken, steuerbar, wie ein- oder ausschaltbar oder dergleichen.

Erfindungsgemäß weist der Deckel eine elektronische Schaltung auf, die Leistungselektronik und Steuerelektronik umfasst. Vorteilhaft ist dabei, dass die mindestens zwei Teile getrennt aufbaubar und wärmetechnisch voneinander abtrennbar sind, insbesondere mittels einer Wärmesperre.

Erfindungsgemäß bilden der Deckel und das Unterteil nach Zusammenfügen einen Kasten, wobei das Unterteil Anschlussvorrichtungen für Energieversorgungsleitungen umfasst, und wobei das Unterteil mindestens drei elektrische Leitungen für Starkstrom zum Deckel aufweist, die lösbar verbunden sind, und wobei das Unterteil einen elektrischen Steckverbinder zum elektrischen Verbinden mit einem an seinem Motoranschlusskasten einen Steckverbinder aufweisenden Elektromotor aufweist.

Somit sind Deckel verschiedener Funktionalitäten, mittels derselben Schnittstelle auf die weiteren Teile aufsetzbar. Durch Austausch eines Deckels gegen einen anderen kann also nicht nur die mechanisch abschließende und schützende Funktion des Deckels, insbesondere in hoher Schutzart, erhalten bleiben sondern es sind sogar verschiedene elektronische Schaltungen austauschbar, wobei wegen der definierten Schnittstelle alle Deckel elektrisch und mechanisch passen. Die elektronischen Schaltungen sind also niedrig integriert oder hoch integriert, mit oder ohne Optionen und/oder Ein- / Ausgänge ausführbar oder dergleichen. Durch die mehrfache Verwendbarkeit ist der Deckel auch in einer größeren Stückzahl herstellbar, was zur Kostensenkung beiträgt.

Ein weiteres wesentliches Merkmal der Erfindung ist, dass die elektronische Schaltung zum elektrischen Beeinflussen eines Elektromotors dient und dieser ein in Sternschaltung betreibbarer Asynchronmotor ist. Gerade diese Motoren sind kostengünstig herstellbar und werden in der Industrie häufig eingesetzt. Allerdings sind zur Beeinflussung solcher Motoren aufwendige Umrichter notwendig, die für in der Industrie Leistungen wie 0,5 kW bis 100kW in einem Deckel nicht untergebracht werden können. Selbst wenn nur ein Ein- und Ausschalten notwendig ist, sind aufwendige, kostspielige verschleißbehaftete Schütze erforderlich. Die Erfindung bildet im Gegensatz dazu einen einfachen, kostengünstigen und verschleißfreien Deckel mit einer elektronischen Schaltung zur Beeinflussung des Motors aus. Insbesondere im Fall der Montage oder der Wartung und Reparatur ist der Deckel kostengünstig, schnell, und einfach austauschbar. Diese Vorteile ergeben sich mit der vorliegenden Erfindung aber nur für Asynchronmotoren, nicht aber für Synchronmotoren oder Reluktanzmotoren.

Vorteiligerweise ist der Deckel kostengünstig fertigbar und bei Fehlern oder Montage leicht austauschbar. Darüber hinaus sind Teile möglichst oft wiederverwendbar.

Bei einer weiteren vorteilhaften Ausgestaltung ist die erste Wärmesperre und/oder zweite Wärmesperre derart ausgeführt, dass sie auch eine Dichtung in hoher Schutzart darstellt und/oder darstellen, wie eine Dichtung gegen das Kontaktkorrosion, Eindringen von Schmutz, Staub, Flüssigkeiten und/oder Wasser oder dergleichen. Besonders vorteilhaft ist dabei, dass die Wärmesperre mehrere Funktionen in sich vereint und daher Teile eingespart werden können.

Bei einer weiteren vorteilhaften Ausgestaltung ist die erste Wärmesperre und/oder zweite Wärmesperre aus Gummi, Plastik und/oder Kunststoff oder dergleichen gefertigt. Besonders vorteilhaft ist dabei, dass ein kostengünstiger Werkstoff verwendbar ist.

Bei einer weiteren vorteilhaften Ausgestaltung weist die Leistungselektronik der elektronischen Schaltung derart viele elektronische Leistungsschalter auf, dass über ein Ein-, Ausschalten und Sanftanlauf sogar eine Drehrichtungsumkehr ausführbar ist. Ein Deckel ohne Drehrichtungsumkehr-Funktionaliät ist also ersetzbar durch einen Deckel mit einer solchen.

Bei einer weiteren vorteilhaften Ausgestaltung weist die Leistungselektronik zum Gehäuseteil des Deckels hin einen niedrigeren Wärmeübergangswiderstand auf als zum Gehäuse des Zwischenteils und/oder als zum Gehäuse des Elektromotors. Vorteilhaft ist dabei, dass die Leistungselektronik wärmetechnisch abtrennbar oder isolierbar ist vom Motorgehäuse und die Wärme über der Deckel an die Umgebung abführbar ist.

Bei einer weiteren vorteilhaften Ausgestaltung ist der Elektromotor in Sternschaltung betreibbar und die Leistungselektronik umfasst elektronische Leistungsschalter und ist derart gestaltet, dass der Sternpunkt auftrennbar oder schließbar ist. Vorteilhaft ist dabei, dass mit wenigen Leistungsschaltern, insbesondere einem einzigen, der Elektromotor vom Netz abtrennbar ist.

Bei einer weiteren vorteilhaften Ausgestaltung sind die Leistungsschalter als Thyristoren oder dergleichen ausgeführt. Darüber hinaus sind die Leistungsschalter mit einer Phasenanschnittsteuerung ansteuerbar, wobei die Spannungen an den Motorwicklungen von Null auf einen Wert veränderbar ist. Vorteilhaft ist dabei, dass der Effektivwert der Spannung, der über eine Netzperiode sich ausbildet, variierbar und/oder beeinflussbar ist.

Bei einer weiteren vorteilhaften Ausgestaltung weist der Deckel mindestens ein Eingabemittel, insbesondere zwei Potentiometer, auf, wobei der zeitliche Verlauf der Spannung an den Motorwicklungen beeinflussbar ist. Vorteilhaft ist dabei, dass in einfacher Weise durch den Bediener auf den Spannungsverlauf am Elektromotor Einfluss genommen werden kann.

Bei einer weiteren vorteilhaften Ausgestaltung ist ein Start-Drehmoment mittels eines ersten Eingabemittels beeinflussbar und/oder ist mittels eines zweiten Eingabemittel die Zeitdauer bis zum Erreichen eines Spannungswertes beeinflussbar. Vorteilhaft ist dabei, dass jedem Eingabemittel eine Einflussgröße zuordenbar ist.

Bei einer weiteren vorteilhaften Ausgestaltung ist mindestens ein Temperatursensor zur Erfassung der Temperatur der elektronischen Leistungsschalter mit den Leistungsschaltern wärmeleitend verbunden und mit der Steuerelektronik elektrisch verbindbar. Vorteilhaft ist dabei, dass der Elektromotor beziehungsweise seine Leistungselektronik abschaltbar ist bei Überschreiten einer ersten kritischen Temperatur.

Bei einer weiteren vorteilhaften Ausgestaltung ist mindestens ein weiterer Temperatursensor zur Erfassung der Temperatur von mindestens einer Wicklung des Elektromotors wärmeleitend mit der Steuerelektronik verbunden und elektrisch verbindbar. Vorteilhaft ist dabei, dass der Elektromotor abschaltbar ist bei Überschreiten einer zweiten kritischen Temperatur.

Bei einer weiteren vorteilhaften Ausgestaltung weist der Deckel ein Peltierelement auf, das mit einem sehr geringen Wärmeübergangswiderstand mit der Leistungselektronik verbunden ist. Vorteilhaft ist dabei, dass die Wärmeabfuhr aus der Leistungselektronik heraus verbessert ist und zur Kühlung eine verschleißfreie Vorrichtung verwendbar ist. Außerdem ist der Deckel in hoher Schutzart fertigbar, da die Peltierelemente keinen Lüftungsschlitz benötigen.

Bei einer weiteren vorteilhaften Ausgestaltung weist der Deckel aktive Kühlelemente, wie Lüfter oder dergleichen, auf. Vorteilhaft ist dabei, dass die Wärmeabfuhr aus der Leistungselektronik heraus verbessert ist, wobei Standardsysteme verwendbar sind. Der Deckel kann bei einer Ausgestaltung Lüftungsschlitze aufweisen. Bei einer anderen Ausgestaltung wird er großflächig ausgeführt und die aktiven Kühlelemente wirbeln Luft oder eine Kühlmedium in einem geschlossenen Raumbereich herum und bringen diesen somit auf ein bestimmtes Temperaturniveau. Somit dient die große Fläche zur Wärmeabfuhr.

Bei einer weiteren vorteilhaften Ausgestaltung weist der Deckel mindestens ein Bypass-Relais oder dergleichen zur Entlastung der Halbleiterelektronik auf. Vorteilhaft ist dabei, dass die Halbleiter kurzschließbar sind und daher weniger Wärme produzieren.

Weitere vorteilhafte Ausgestaltungen ergeben sich aus den Unteransprüchen.

### Bezugszeichenliste

- (1): Elektromotor mit Gehäuse
- (2): Zwischenteil
- (3): Deckel
- (4): erste Wärmesperre
- (5): zweite Wärmesperre
- (6): Durchgangsbohrungen für Kabel
- (7): erstes Eingabemittel
- (8): zweites Eingabemittel
- (31): Leistungselektronik
- (32): Steuerelektronik
- (41): Ansteuerungseinheit
- (42): Energieversorgungseinrichtung
- (43): Messeinrichtung
- (50): Gleichrichterbrücke
- (81): AS-i-Kabel
- (82): Starkstromleitungen
- (83): Starkstromleitungen
- (84): Potentiometer
- (85): PG-Verschraubung
- (91): Zwischenteil des Motoranschlusskastens
- (92): Unterteil des Kastens
- (93): Steckverbinderteil (Stecker)
- (94): Steckverbinderteil (Buchse)
- (95): PG-Verschraubung
- (100): Platte

Die Erfindung wird nun anhand von Abbildungen und Ausführungsbeispielen näher erläutert:

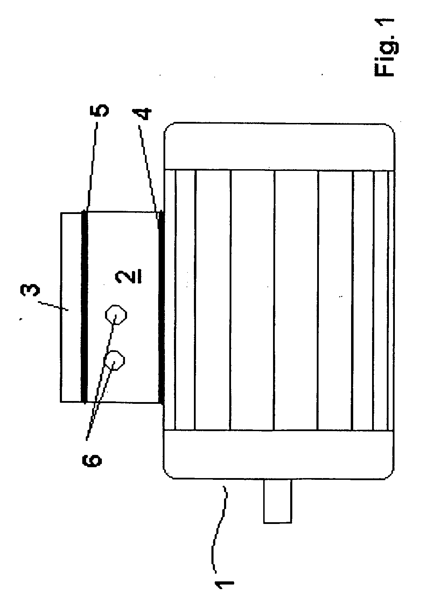

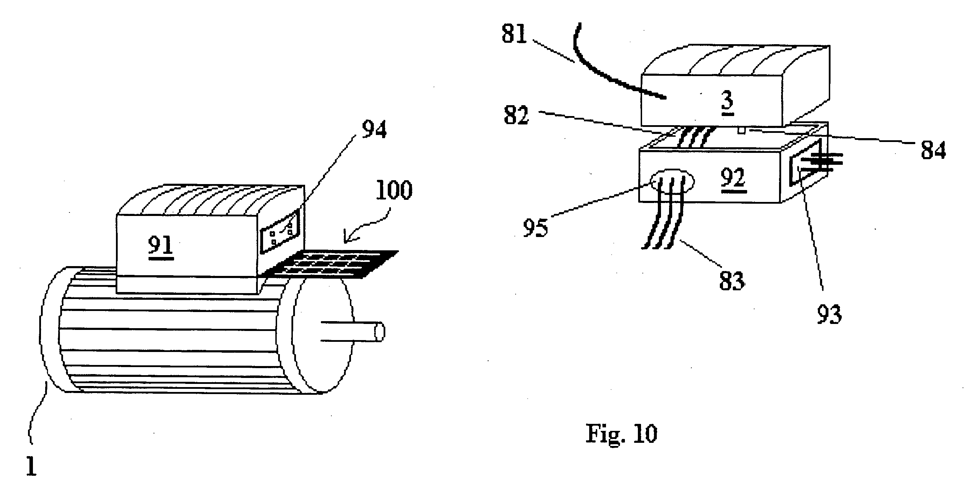

Dabei dienen die Figuren 1 bis 9 nur zur Erläuterung des technischen Hintergrundes, die Figur 10 zur Erläuterung eines erfindungsgemäßen Ausführungsbeispiels.

In der Figur 1 ist ein Elektromotor skizziert. Der Elektromotor mit Gehäuse (1) ist mittels einer ersten Wärmesperre (4) vom Zwischenteil (2) des Motoranschlusskastens wärmetechnisch getrennt. Eine zweite Wärmesperre (5) trennt das Zwischenteil (2) vom Deckel (3) des Motoranschlusskastens wärmetechnisch ab. Die beiden Wärmesperren sind in hoher Schutzart ausgeführt und stellen daher Abdichtungen gegen Schmutz, Staub, Flüssigkeiten, wie Wasser, Basen, Säuren, Öle oder dergleichen, dar. Das Zwischenteil (2) weist Durchgangsbohrungen für Kabel (6) auf. In diese Durchgangsbohrungen (6) werden PG-Verschraubungen eingebracht, durch die mindestens die Leitungen zur Energieversorgung durchführen.

Der Deckel (3) ist mittels eines Steckverbinders elektrisch mit dem Zwischenteil (2) verbunden. Über diesen Steckverbinder hinaus weist der Deckel noch eine Leitung zur Erdung des Deckels auf. Diese Erdungsleitung ist mit dem Zwischenteil verbunden.

Die elektronische Schaltung im Deckel (3) des Motoranschlusskastens weist Steuer- und Leistungselektronik auf. Die Leistungselektronik umfasst elektronische Leistungsschalter, die ihre Wärme an das Gehäuseteil des Deckels (3) abgeben. Als elektronische Leistungsschalter werden Thyristoren eingesetzt. Bei anderen Ausführungsbeispielen werden andere Leistungsschalter eingesetzt oder statt des Steckverbinders nur Starkstromkabel zwischen Deckteil (3) und Zwischenteil (2) zur elektrischen Verbindung verwendet.

Bei dem Ausführungsbeispiel der Figur 1 ist mittels elektronischer Leistungsschalter der Elektromotor aus- und einschaltbar. Ein erster Temperatursensor ist wärmeleitend mit den Leistungsschaltern verbunden. Bei einem weiteren Ausführungsbeispiel ist der erste Temperatursensor mit der Montagefläche verbunden, die aber einen sehr geringen Wärmeübergangswiderstand zu den elektronischen Leistungsschaltern aufweist; somit ist auch in diesem Fall der erste Temperatursensor wärmeleitend mit den Leistungsschaltern verbunden. Elektrisch ist der erste Temperatursensor mit der elektronischen Schaltung verbunden. Daher ist bei starkem Anstieg der Temperatur der Leistungsschalter aus Sicherheitsgründen die elektronische Schaltung abschaltbar. Alternativ wird in weiteren Ausführungsbeispielen der Wert der Temperatur und/oder eine entsprechende Fehlermeldung über die Vorrichtung zum Austausch von Informationen an ein weiteres Gerät, wie einen Zentralrechner und/oder ein dezentrales Steuerungsmodul, weitergemeldet.

Ein zweiter Temperatursensor ist wärmeleitend mit den Wicklungen im Elektromotor verbunden und an die Steuerelektronik elektrisch angeschlossen. Ebenso ermöglicht dies ein Weitermelden eines Überschreitens eines kritischen Temperaturwertes an weitere Geräte. Es ermöglicht aber auch eine Sicherheitsabschaltung. Je nach Typ der Anlage und dem dort verwendeten Sicherheitskonzept werden die Möglichkeiten angewendet oder nicht verwendet.

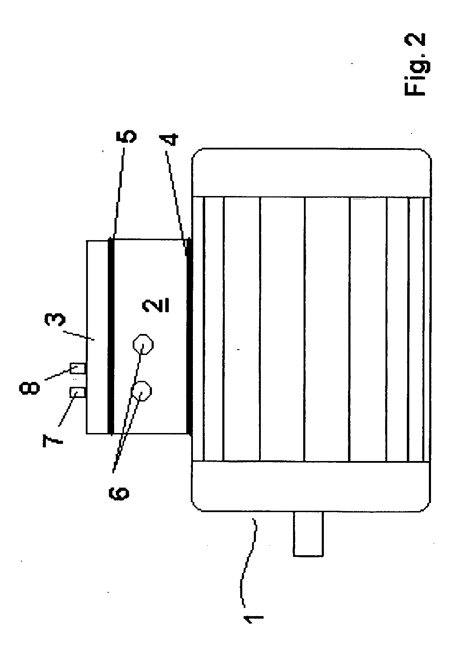

Figur 2 zeigt ein weiteres Ausführungsbeispiel. Die elektronische Schaltung am Deckel (3) unterscheidet sich von der des in Figur 1 gezeigten Deckels; sie weist eine Steuerschaltung auf, die eine Vorrichtung zur Phasenanschnittsteuerung der Thyristoren umfasst. Als erstes Eingabemittel (7) und als zweites Eingabemittel (8) wird jeweils ein Potentiometer eingesetzt. Auf diese Weise kann die Motor-Spannung oder deren Effektivwert auf Werte zwischen Null und Netzspannung in einer veränderbaren Weise gebracht werden.

Das erste Eingabemittel (7) beeinflußt dabei vorteilhaft den Startwert der Spannung - und damit auch den Startwert des Drehmomentes -, und das zweite Eingabemittel (8) beeinflusst die Zeitdauer bis zum Erreichen eines End-Wertes, insbesondere ist dies der Effektivwert der Netzspannung.

Der Deckel aus Figur 1 ist austauschbar mit dem Deckel aus Figur 2. Somit kann im Feld in einfacher Weise schnell und kostengünstig die Funktionalität eines Elektromotors geändert werden. Darüber hinaus wird der Deckel aus Figur 1 und ebenso der Deckel aus Figur 2 jeweils auch in verschiedenen Versionen bestückt. Insbesondere werden Deckel gefertigt, die eine Profibus-kompatible Steuerelektronik aufweisen, und es werden Deckel gefertigt, die eine INTERBUS-kompatible Steuerelektronik aufweisen. Bei der Zusammenstellung und Bearbeitung eines Kundenauftrages kann daher der Elektromotor mit Motoranschlusskasten gefertigt werden und danach mit einem dem Kundenwunsch entsprechenden Deckel versehen werden. Ebenso sind weitere Deckel mit entsprechend unterschiedlicher Funktionalität fertigbar.

Die Elektromotoren mit einem Motoranschlusskasten samt Deckel bilden also eine Baureihe. Ein erster beispielhafter Vertreter dieser Baureihe ist in Figur 1 gezeigt. Ein zweiter beispielhafter Vertreter ist in Figur 2 gezeigt.

In weiteren erfindungsgemäßen Ausführungsbeispielen werden Deckel mit verschiedenen Vorrichtungen zum Austausch von Informationen gefertigt. Bei einem Ausführungsbeispiel wird dabei die elektronische Schaltung derart ausgeführt, dass elektromagnetische Signale auf die Leistungskabel aufmoduliert werden. Insbesondere kann mit einer Trägerfrequenz von beispielhaft 200kHz gearbeitet werden. Es sind aber auch Deckel ausführbar mit einer Trägerfrequenz von einigen MHz. Bei einem weiteren Ausführungsbeispiel werden modulierte elektromagnetische Funkwellen zur Übertragung genutzt. Dazu weist der Deckel ein als Antenne wirksames Element auf, insbesondere kann diese Funktion auch von Teilen übernommen werden, die sowieso schon vorhanden sind, wie elektrische Leitungen, Gehäuseteile oder dergleichen, oder die speziell zu diesem Zweck konstruiert und ausgelegt sind. Bei einem Ausführungsbeispiel wird modulierte Infrarotstrahlung zur Übertragung der Information genutzt. Insbesondere weist dabei das Zwischenteil und/oder Deckel entsprechende Bauteile auf. Insbesondere sind in einem Ausführungsbeispiel Infrarot-Halbleiter, wie Dioden und/oder Transistoren zum Senden und/oder Empfangen von InfrarotStrahlung oder dergleichen, am Motoranschlusskasten angebracht, insbesondere auf seinem Deckel, oder mit dem Deckel verbunden.

Weitere Ausführungsbeispiele weisen mindestens ein Bypass-Relais auf. Solche Bypass-Relais dienen zur Entlastung der elektronischen Leistungsschalter, wie Thyristoren oder dergleichen. Die Steuerelektronik steuert die Bypass-Relais an, wenn eine gewisse Zeitdauer nach dem Einschalten vergangen ist oder eine gewisse Motorspannung, insbesondere Netzspannung, erreicht ist. Die Bypass-Relais schließen dann die elektronischen Leistungsschalter kurz und entlasten sie dadurch. Außerdem wird dadurch der Energieverbrauch reduziert.

Weitere Ausführungsbeispiele weisen passive Kühl-Systeme, wie Peltier-Elemente oder dergleichen, auf zur Kühlung der Leistungselektronik. Dies ist besonders vorteilhaft, da dies eine verschleißfreie Art der Kühlung ist.

Weitere Ausführungsbeispiele weisen aktive Kühl-Systeme, wie Lüfter oder dergleichen, auf. Diese sind kostengünstiger als Kühl-Systeme mit Peltier-Elementen.

Deckel mit verschiedenen Kühl-Systemen sind austauschbar. Ein Deckel ohne besonderes Kühlsystem ist also gegen einen Deckel mit einem leistungsfähigeren Kühlsystem austauschbar. Dies ist insbesondere dann vorteilhaft, wenn festgestellt wird, dass bei dem zuerst eingesetzten die Kühlleistung nicht ausreicht.

Ebenso sind Deckel mit verschieden ausgeprägter Hardware und/oder Software austauschbar. Von Vorteil ist dabei, dass in einfacher Weise schnell und kostengünstig die Funktionalität austauschbar und somit veränderbar ist.

In einem weiteren Ausführungsbeispiel sind Ecken, Kanten, Ausbuchtungen, Auskragungen oder dergleichen am Deckel und/oder am Zwischenteil vorgesehen, um zu verhindern, dass diejenigen Deckel austauschbar sind, deren Software und/oder Hardware nicht zur gegebenen Motorkonfiguration passt. Zur Motorkonfiguration zählt dabei Motorleistung, Art des Motors, wie Polzahl oder dergleichen, oder auch Vorhandensein von Zusatzbaugruppen, wie einer Bremse, eines Lüfters, ein Temperatursensor oder dergleichen. Die mechanische Schnittstelle des Deckels zum Zwischenteil hin ist bei diesem Ausführungsbeispiel also derart ausgelegt, dass Sicherheit für das Anschließen hinsichtlich des elektrischen Betriebs gegeben ist. Insbesondere ist die mechanische Schnittstelle derart gestaltet mit den genannten Ecken, Kanten, etc., dass der Deckel verdreht nicht aufsetzbar ist. Somit wird beispielsweise ein Schutz gegen Verpolung, Drehrichtungsumkehr oder dergleichen erreicht.

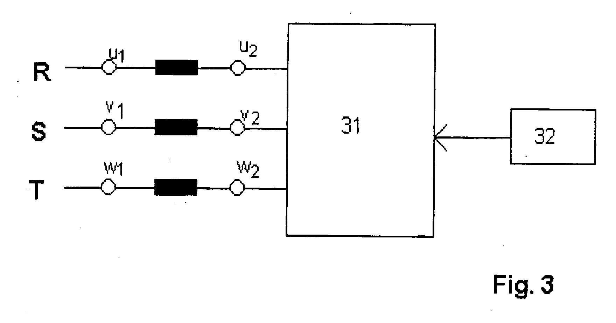

In der Figur 3 ist ein Ausführungsbeispiel gezeigt. Die Leistungselektronik (31) ist von der Steuerelektronik (32) beeinflussbar und der Sternpunkt des Elektromotors u₂ v₂ w₂ ist mittels elektronischer Leistungsschalter der Leistungselektronik (31) verbindbar. Temperatursensoren sind in dieser Figur nicht eingezeichnet.

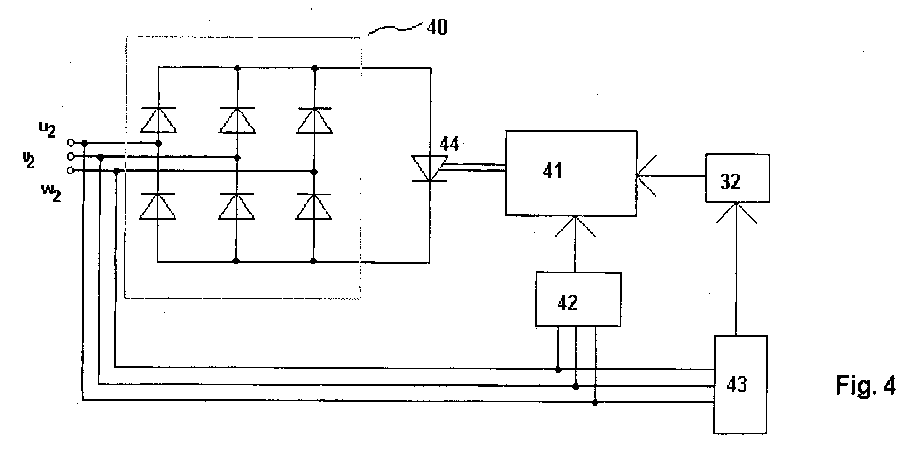

In der Figur 4 ist ein weiteres Ausführungsbeispiel gezeigt. Die ungesteuerte Gleichrichterbrücke (40) ist an die sternpunktseitigen Anschlüsse des Elektromotors angeschlossen. Mittels des elektronischen Leistungsschalters (44) wird die Sternpunktverbindung geschlossen oder geöffnet. Die Steuerelektronik (32) beeinflußt die Ansteuerungseinheit (41), welche wiederum den elektronischen Leistungsschalter (44) beeinflußt. Dabei wird Ansteuerungseinheit (41) über die Energieversorgungseinrichtung (42) versorgt. Eine Messeinrichtung (43) versorgt die Steuerelektronik (32) mit Informationen oder Signalen über die Spannungen und/oder Phasenlagen der Netzphasen. In einem weiteren Ausführungsbeispiel versorgt die Messeinrichtung (43) die Steuerelektronik (32) auch mit Energie. Des weiteren sind an die Steuerelektronik (32) auch Sensoren, wie Temperaturfühler oder dergleichen, anschließbar. Besonders nützlich ist der Anschluss eines Temperatursensors, welcher die Temperatur der Leistungselektronik, insbesondere der elektronischen Leistungsschalter, überwacht. Bei Überschreiten einer kritischen Temperatur ist dann ein Abschalten der Elektronik ausführbar. Ebenfalls nützlich ist ein Temperatursensor, welcher die Temperatur der Wicklungen des Stators des Elektromotors überwacht. Bei Überschreiten einer weiteren kritischen Temperatur ist wiederum ein Abschalten der Elektronik und/oder des Elektromotors ausführbar.

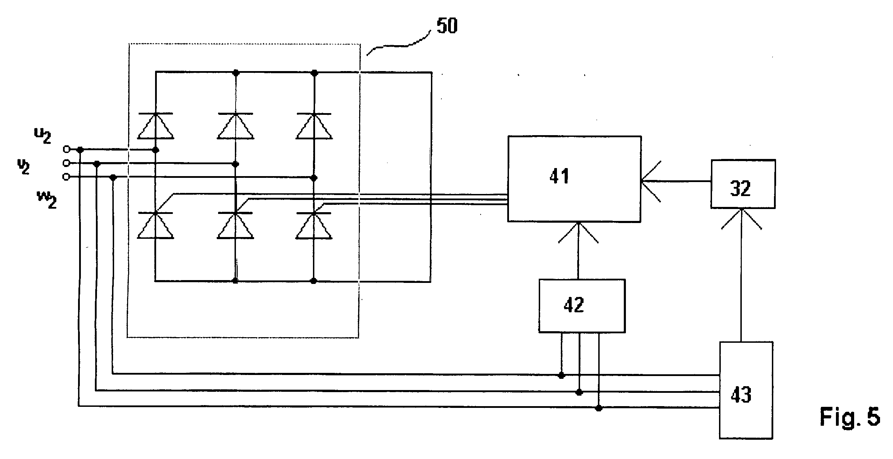

In der Figur 5 ist ein weiteres Ausführungsbeispiel gezeigt. Die gesteuerte Gleichrichterbrücke (50) ist an die sternpunktseitigen Anschlüsse des Elektromotors angeschlossen. Sie umfasst im gezeigten Ausführungsbeispiel Thyristoren. Die Steuerelektronik (32) beeinflußt die Ansteuerungseinheit (41) derart, dass eine Phasenanschnittsteuerung der Thyristoren ausführbar ist. Somit kann der Effektivwert der Spannung auf einen gegenüber dem Netz-Effektivwert geringeren Wert herabgesetzt werden. Insbesondere beim Einschalten des Elektromotors kann die Spannung von Null Volt innerhalb einer gewissen Zeitspanne auf einen gewissen Wert gebracht werden. Zum direkten Anschalten des Netzes an den Elektromotor ergibt sich somit ein niedrigeres Anlaufdrehmoment des Elektromotors. Insgesamt läuft der Elektromotor sanfter an, also mit weniger Ruck. Allerdings ist der Elektromotor für die jeweilige mechanische Anwendung geeignet zu auszulegen. Die Zeitkonstanten dieses Hochfahrens sind über Eingabemittel, wie Potentiometer oder Eingabetasten oder dergleichen, beeinflussbar. Insbesondere kann mittels eines ersten Eingabemittels der Startwert der Spannung, also auch das Drehmoment beim Starten, beeinflusst werden und mittels eines zweiten Eingabemittels die Zeitdauer bis zum Erreichen des gewünschten Spannungswertes beeinflusst werden.

Durch ein drittes Eingabemittel ist bei einem weiteren Ausführungsbeispiel der Konvergenz- oder End-Wert des Effektivwerts der Spannung beeinflussbar. Allerdings ist dabei die Wärmeproduktion der Leistungselektronik dauerhaft erhöht.

Bei weiteren Ausführungsbeispielen besitzt die elektronische Schaltung jeweils Umsetzer für Bus oder Bus-ähnliche Systeme, wie Interfaces, AS-i oder dergleichen. Somit ist die elektronische Schaltung derart auslegbar, dass die genannten durch Eingabemittel beeinflussbaren Werte mittels Datenübertragung beeinflussbar sind. Es werden also über einen Bus oder Bus-ähnliche Systeme Daten derart übertragen, dass die von den Eingabemitteln beeinflussten Werte ohne solche Eingabemittel beeinflussbar sind. Insbesondere werden sie von der elektronischen Schaltung abgespeichert, so dass sie sogar nach Aus- und Wiedereinschalten der elektronischen Schaltung oder der ganzen Anlage erhalten bleiben. Insbesondere weist die elektronische Schaltung hierfür EEPROM auf. Dadurch sind bei solchen Ausführungen des Deckels die genannten Eingabemittel, insbesondere mechanische und daher kostspielige, verzichtbar und der Deckel in sehr hoher Schutzart kostengünstig ausführbar.

Bei einem weiteren Ausführungsbeispiel sind zur Entlastung der elektronischen Leistungsschalter Bypass-Relais einsetzbar. Diese schließen die Halbleiterschalter nach Erreichen des Konvergenz- oder End-Wertes des Effektivwerts der Spannung kurz, entlasten diese und vermindern daher auch die Wärmeproduktion der Leistungselektronik.

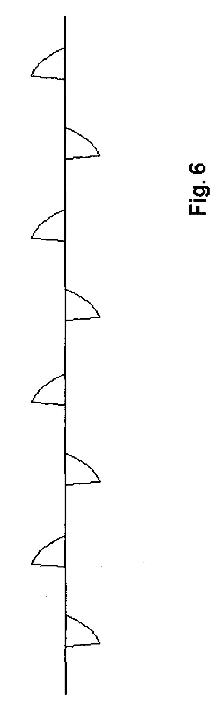

In der Figur 6 ist ein beispielhafter zeitlicher Spannungsverlauf bei Verwendung einer Phasenanschnittsteuerung für ein antiparallel angeordnetes Thyristoren-Paar zum Versorgen einer im Wesentlichen ohmschen Last gezeigt. Ab einem gewissen wählbaren Phasenwinkel wird der Thyristor vom sperrenden in den leitenden Zustand versetzt. Bei Vorzeichenwechsel des Thyristorstromes wird der Thyristor wieder sperrend. Während der nächsten Halbperiode der Netzspannung wird der antiparallele Thyristor in entsprechender Weise behandelt. Das Vorgehen wird mit Netzfrequenz wiederholt und weist daher die selbe Periodizität auf wie das Netz. Die über eine Netzperiode erreichbare effektive Spannung reicht von Null Volt bis zum Effektivwert der Netzspannung.

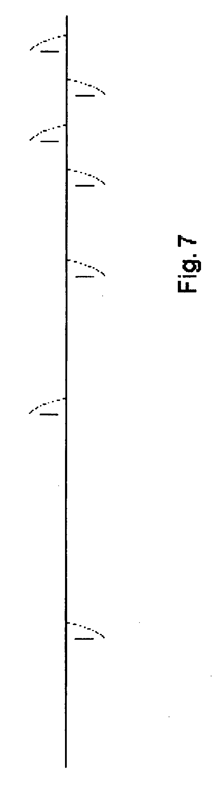

In der Figur 7 ist wiederum ein beispielhafter Spannungsverlauf bei Verwendung einer Phasenanschnittsteuerung für ein antiparallel angeordnetes Thyristoren-Paar gezeigt. Im Unterschied zur Figur 6 wird jedoch das Zünden der Thyristoren nicht mit Netzfrequenz regelmäßig wiederholt. Dem Zünden eines Thyristors folgen immer weniger Netzhalbperioden, während deren Dauer kein Zünden erfolgt. Nach einiger Zeit wird jedoch in regelmäßigen Abständen, insbesondere netzperiodisch, gezündet. Es wird sozusagen der instantane Frequenzwert von 0 Hz auf Netzfrequenz gebracht. Auf die beschriebene Weise ist also nicht nur der Effektivwert sondern ein einem Frequenzwert ähnlicher Wert veränderbar. Insbesondere bei Motoren großer Leistung und/oder bei Verwendung von großen Lasten oder Trägheitslasten ist diese in der Figur 7 gezeigte Methode vorteilhaft.

In einem weiteren Beispiel ist auf analoge Weise eine Frequenz von einem Bruchteil der Netzfrequenz, wie ein Viertel oder eine Hälfte oder dergleichen, dauerhaft erreichbar. Der Elektromotor kann durch Weglassen von jeweils zwei Zündereignissen der Figur 6 leicht mit einem Drittel der Netzfrequenz betrieben werden.

In einem weiteren Ausführungsbeispiel werden in der Figur 5 alle drei Dioden durch von der Ansteuerungseinheit (41) angesteuerte Thyristoren ersetzt. Durch Phasenanschnittsteuerung der beschriebenen Art sind dann auch andere End-Frequenzen oder andere Sanftanlaufsarten realisierbar. Insbesondere kann die Spannung und/oder Frequenz fein variiert werden.

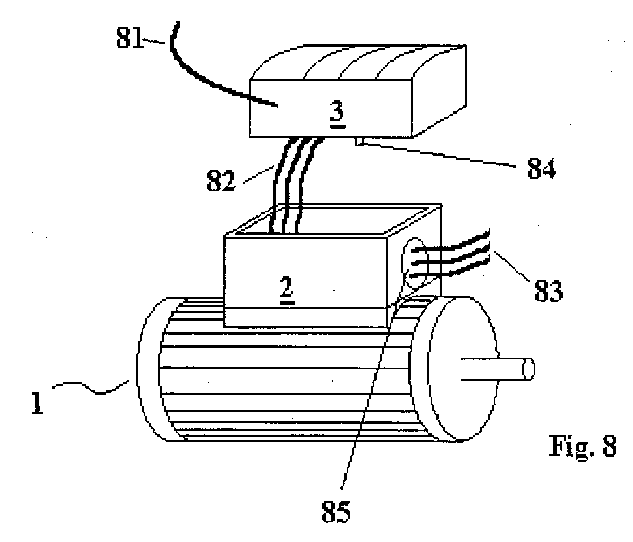

In der Figur 8 ist wiederum der Elektromotor (1) mit einem Zwischenteil (2), das Anschlussvorrichtungen, insbesondere einen Klemmenstein, für die Starkstromleitungen (83) aufweist. Insbesondere am Klemmenstein ist die Betriebsart in Stern/Dreieck-Betriebsart einstellbar. Die Starkstromleitungen (83) sind durch die PG-Verschraubung (85) ins Zwischenteil (2) geführt.

Bei einer weiteren Ausführungsform wird die PG-Verschraubung (85) als Steckverbinder für eine schnell lösbare Verbindung ausgeführt. Der Deckel (3) ist in leicht abgehobener Position gezeichnet. Der Sternpunkt ist nicht, wie üblich, kurzgeschlossen, sondern mit den drei Starkstromleitungen (82) zum Deckel (3) geführt.

Bei einem weiteren Ausführungsbeispiel ist statt der Starkstromleitungen (82) eine Verbindung mit Steckverbinder verwendet. Der Deckel (3) weist einen Anschluss für AS-i auf. Hierfür umfasst die elektronische Schaltung einen Umsetzer, der seine Spannungsversorgung aus dem AS-i-Bus bezieht und die Daten des Busses der restlichen Signalelektronik der elektronischen Schaltung zur Verfügung stellt.

Der Deckel (3) weist darüber hinaus mindestens ein Potentiometer (84) auf. Mit dem oder den Potentiometern sind die Rampen des Sanftanlaufs beeinflussbar, also Startwert der Spannung, Zeitverhalten des Spannungsverlaufs und/oder End-Wert der Spannung.

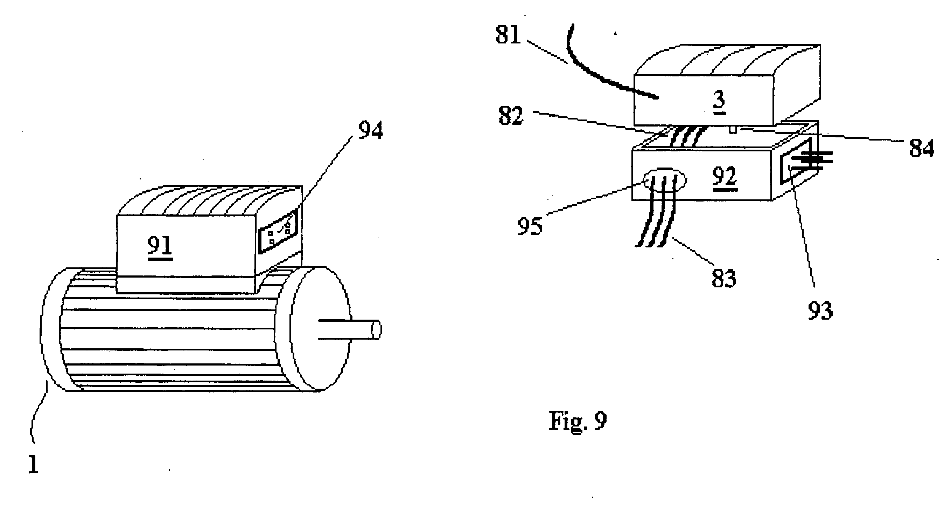

In der Figur 9 ist ein Elektromotor (1) gezeigt, der einen geschlossenen Motoranschlusskasten (91) mit Steckverbinderanschluss oder Steckverbinderteil (94) zeigt. Dem Fachmann sind solche Ausführungsformen mit DESINA® -Industrienorm bekannt. Solche Normen wurden geschaffen, um Motoren leicht und schnell anschließ- oder tauschbar zu gestalten. Bei diesen DESINA® -Industrienorm-Motoren werden alle Motorwicklungsanschlüsse am Steckverbinderteil übergeben. Somit sinken in einer großen Anlage mit vielen Antrieben sie Kosten für Installation, Montage und Wartung erheblich. Zum elektrischen Anschluss des Elektromotors (1) wird der Kasten verwendet, der an seinem Unterteil (92) das zum Steckverbinderteil (94) passende Steckverbinderteil (93) aufzeigt. In der Figur 9 ist das Steckverbinderteil (94) als Buchse und das Steckverbinderteil (93) als Stecker ausgeführt. Bei einem weiteren Ausführungsbeispiel sind Stecker und Buchse aus Sicherheitsgründen vertauscht.

Das Unterteil (92) des Kastens weist eine PG-Verschraubung (94) für die Starkstromleitungen (83) zur Energieversorgung auf. Bei einem weiteren Ausführungsbeispiel ist die PG-Verschraubung durch eine Steckverbindung mit Steckverbinderteilen ersetzt. Somit kann dann die Energieversorgung netzseitig schnell getrennt werden. Der Deckel (3) ist in der Figur 9 entsprechend der Figur 8 mit dem Unterteil (92) verbunden, da ja die Schnittstelle des Deckels (3) elektrisch und mechanisch gleichartig ausgeführt ist. In der Figur 9 sind ebenfalls Starkstromleitungen (82) vom Deckel (3) zum Unterteil (92) gezeigt, die bei einem weiteren Ausführungsbeispiel durch eine Steckverbindung ersetzt werden.

Die Deckel der Figuren und die oben beschriebenen Deckel bilden zusammen eine Baureihe, wobei innerhalb der Baureihe auch elektronische Schaltungen mit verschiedenen Funktionen ausbildbar sind. Beispielsweise mit oder ohne Speicher, mit oder ohne Temperatursensor etc.. Die mit Steckverbinder ausgeführten Deckel (3) können sowohl auf einem Unterteil (92) eines Kastens, wie in Figur 9 gezeigt, als auch auf einem passenden Zwischenteil (2) eines Motoranschlusskastens aufgesetzt werden. Durch die vielseitige Verwendbarkeit kann der Deckel in großer Stückzahl produziert werden. Außerdem ist in der gezeigten Art und Weise ein Verdrahtungskonzept geschaffen worden, das insbesondere bei großen Anlagen einsetzbar ist, wobei die Elektromotoren über ein Bussystem steuerbar sind. Insbesondere bei Verwendung von Steckverbindern kann der Montage-, Installations- und Wartungsaufwand erheblich reduziert werden. Darüber hinaus laufen die Elektromotoren sanft an und das genaue Anlaufverhalten ist sogar einstellbar. Bei Einsatz von Deckeln mit programmierbarer elektronischer Schaltung, die einen Speicher aufweist, ist sogar vom Zentralrechner aus das Anlaufverhalten beeinflussbar.

In der Figur 10 ist eine Platte (100) gezeigt, auf die der Kasten, umfassend das Unterteil 92 und den Deckel (3), aufsetzbar und lösbar verbindbar ist. Das Steckverbinderteil (94) und das Steckverbinderteil (93) sind somit weniger belastet und ist auch bei Anwendungen mit starken Rüttelschwingungen einsetzbar.

## Patentansprüche

1. Drehstrommotor (1), umfassend einen Motoranschlusskasten (91) und einen Kasten,
der ein Unterteil (92) umfasst und einen zur Bildung des Kastens darauf aufgesetzten Deckel (3),
wobei der Deckel (3) eine elektrische und mechanische Schnittstelle zum Aufsetzen auf weitere, verschieden geartete Teile (2, 92) aufweist,
wobei der Deckel (3) eine elektronische Schaltung zum elektrischen Beeinflussen des jeweiligen Drehstrommotors (1) umfasst, die Leistungselektronik und Steuerelektronik und eine programmierbare Logik und/oder einen Speicher, wie EEPROM, umfasst,
wobei die elektronischen Schaltung Anschlussvorrichtungen zum Übertragen von Information umfasst,
wobei der Motoranschlusskasten (91) des Drehstrommotors (1) einen Steckverbinder (94) aufweist,
wobei
die elektronische Schaltung Vorrichtungen zum Austausch von Informationen durch Aufmodulation elektrischer Signale auf die Leistungskabel umfasst,
wobei die elektronische Schaltung einen Umsetzer zum Umsetzen von mit EiB oder LON übertragener oder zu übertragender Information auf digitale Ein-/Ausgänge und der Deckel hierfür entsprechende Anschlussvorrichtungen aufweist,
wobei das Unterteil (92) einen elektrischen Steckverbinder (93) zum elektrischen Verbinden mit dem Steckverbinder (94) des Motoranschlusskastens (91) aufweist, wobei eine Platte diese Steckverbindung entlastet, indem der Kasten, umfassend das Unterteil (92) und den Deckel (3), auf die mit dem Motoranschlusskasten (91) verbundene Platte (100) aufgesetzt und lösbar verbunden ist.

2. Drehstrommotor nach Anspruch 1,
**dadurch gekennzeichnet, dass**
der Deckel mittels mindestens eines elektrischen Steckverbinderteils mit einem im Unterteil (92) befindlichen entsprechenden Steckverbinderteil verbunden ist,
wobei der Deckel eine elektrische und mechanische Schnittstelle zum Aufsetzen auf das Unterteil (92) des Kastens aufweist,
und wobei das Unterteil (92) Anschlussvorrichtungen für Energieversorgungsleitungen umfasst.

## Claims

1. Three-phase motor (1), comprising a motor connection box (91) and a box,
which comprises a bottom part (92) and a top (3) placed thereupon to form the box,
wherein the top (3) comprises an electrical and mechanical interface for placing upon further parts (2, 92) of different types,
wherein the top (3) comprises an electronic circuit for electrically influencing the respective three-phase motor (1), which circuit comprises power electronics and control electronics and programmable logic and/or a memory, such as EEPROM,
wherein the electronic circuit comprises connection devices for transmitting information,
wherein the motor connection box (91) of the three-phase motor (1) comprises a plug-in connector (94),
wherein the electronic circuit comprises devices for exchanging information by modulating electrical signals onto the power cables,
wherein the electronic circuit comprises a converter for converting information transmitted or to be transmitted by EiB or LON into digital inputs/outputs and the top comprises corresponding connection devices therefor,
wherein the bottom part (92) comprises an electrical plug-in connector (93) for electrical connection to the plug-in connector (94) of the motor connection box (91), wherein a plate relieves the load on this plug-in connection in that the box, comprising the bottom part (92) and the top (3), is placed upon and detachably connected to the plate (100) connected to the motor connection box (91).

2. Three-phase motor according to Claim 1,
**characterised in that**
the top is connected to a corresponding plug-in connector part situated in the bottom part (92) by means of at least one electrical plug-in connector part,
wherein the top comprises an electrical and mechanical interface for placing upon the bottom part (92) of the box,
and wherein the bottom part (92) comprises connection devices for energy supply lines.

## Revendications

1. Moteur triphasé (1), comprenant un boîtier de raccordement de moteur (91) et un boîtier qui comprend une partie inférieure (92) et un couvercle (3) posé dessus pour former le boîtier,
le couvercle (3) présentant une interface électrique et mécanique pour sa pose sur d'autres parties (2, 92) de types différents,
le couvercle (3) comprenant un circuit électronique permettant d'influencer électriquement le moteur triphasé (1) respectif, qui comprend une électronique de puissance, une électronique de commande, une logique programmable et/ou une mémoire, telle qu'une EEPROM,
le circuit électronique comprenant des dispositifs de raccordement permettant la transmission d'une information,
le boîtier de raccordement de moteur (91) du moteur triphasé (1) présentant un connecteur (94),
le circuit électronique comprenant des dispositifs permettant l'échange d'informations par modulation de signaux électriques sur les câbles de puissance,
le circuit électronique présentant un convertisseur pour convertir une information transmise ou à transmettre avec EiB ou LON sur des entrées/sorties numériques et le couvercle des dispositifs de raccordement correspondants à cet effet,
la partie inférieure (92) présentant un connecteur électrique (93) pour sa connexion électrique avec le connecteur (94) du boîtier de raccordement de moteur (91), une plaque déchargeant cette connexion par le fait que le boîtier, comprenant la partie inférieure (92) et le couvercle (3), est posé et relié de manière détachable sur la plaque (100) reliée au boîtier de raccordement de moteur (91).

2. Moteur triphasé selon la revendication 1,
**caractérisé en ce que**
le couvercle est relié au moyen d'au moins une partie de connecteur électrique à une partie de connecteur correspondante se trouvant dans la partie inférieure (92),
le couvercle présentant une interface électrique et mécanique pour sa pose sur la partie inférieure (92) du boîtier,
et la partie inférieure (92) comprenant des dispositifs de raccordement pour des lignes d'alimentation en énergie.
